# FASCICULE DE BREVET EUROPEEN

(11) **EP 3 333 461 B1**
(45) Date de publication et mention de la délivrance du brevet: **11.09.2019**
(21) Numéro de dépôt: 17200110.9
(22) Date de dépôt: 06.11.2017
(51) Int. Cl.: F16H 59/44, F16H 59/04, F16H 61/16, F16H 61/22

(54) **DISPOSITIF DE CONTRÔLE DU PASSAGE DES RAPPORTS D'UNE BOÎTE DE VITESSES MANUELLE DE VÉHICULE EN FONCTION DE LA VITESSE**
KONTROLLVORRICHTUNG DES SCHALTVORGANGS EINES MANUELLEN SCHALTGETRIEBES EINES FAHRZEUGS IN ABHÄNGIGKEIT VON DER GESCHWINDIGKEIT
DEVICE FOR CONTROLLING THE GEAR SHIFTING OF A MANUAL GEARBOX OF A VEHICLE ACCORDING TO THE SPEED

(30) Priorité: 06.12.2016 FR 1661975
(43) Date de publication de la demande: 13.06.2018
(73) Titulaire: PSA Automobiles SA, 78300 Poissy (FR)
(72) Inventeur: FALCOZ, MARC, 78100 ST GERMAIN EN LAYE (FR); GALVIN, MATHIAS, 75011 PARIS (FR); FERREIRA TAVARES, EDUARDO, 93220 GAGNY (FR)

(56) Documents cités:
- EP-A2- 0 943 843
- DE-A1- 4 118 930
- US-A1- 2004 134 743
- US-A1- 2016 245 395

## Description

L'invention concerne les véhicules qui comprennent une boîte de vitesses de type manuel, et plus précisément le contrôle des changements de rapport de ce type de boîte de vitesses.

Une boîte de vitesses manuelle, d'un véhicule, est habituellement couplée à un mécanisme de changement de rapport qui comprend un levier de vitesse permettant à un conducteur de sélectionner des rapports (ou vitesses). Le déplacement de ce levier de vitesse est habituellement contraint par une grille de sélection de vitesse qui dépend de l'architecture de la boîte de vitesses.

Afin d'éviter que le rapport de marche arrière soit malencontreusement sélectionné, par exemple pendant que le véhicule circule en marche avant ou bien à la place d'un rapport de marche avant, son mécanisme de changement de rapport comprend un dispositif de sécurité. Par exemple, tant que ce dernier n'a pas été volontairement actionné (ou déverrouillé) par le conducteur du véhicule, le rapport de marche arrière ne peut pas être sélectionné. En variante, comme décrit dans le document brevet JP 57140229, le dispositif de sécurité peut être agencé de manière à n'empêcher la sélection du rapport de marche arrière que lorsque la vitesse en cours du véhicule est supérieure à un seuil prédéfini. Le document EP0943843A2 montre un dispositif selon le préambule de la revendication 1.

De tels dispositifs de sécurité ne permettent cependant pas d'empêcher que le conducteur sélectionne un rapport qui est notablement inférieur au rapport en cours de sélection. Ainsi, il ne permet pas, par exemple, d'empêcher le passage du 5^{ème} rapport au 1^{er} ou 2^{ème} rapport, ou bien du 4^{ème} rapport au 1^{er} rapport. Or, de tels passages peuvent induire dans la boîte de vitesses d'importantes contraintes qui peuvent user prématurément, voire endommager ou casser, certaines de ses pièces internes, en particulier lorsque la vitesse en cours du véhicule est élevée par rapport à la vitesse maximale qui est associée au rapport inférieur.

Le risque de réalisation de ce type de passage de rapport est encore notablement accru lorsque le véhicule comporte, d'une part, une chaîne de transmission hybride, c'est-à-dire comprenant un moteur thermique, propre à être couplé à une boîte de vitesses manuelle via un organe de couplage (comme par exemple un embrayage), en vue d'entraîner un train de transmission, et au moins une machine motrice électrique associée à des moyens de stockage d'énergie et propre à entraîner le même train de transmission que le moteur thermique ou un autre train de transmission, et, d'autre part, un mécanisme de changement de rapport permettant de sélectionner des rapports dits thermiques et des rapports dits électriques.

L'invention a notamment pour but d'améliorer la situation.

Elle propose notamment à cet effet un dispositif de contrôle destiné à équiper un mécanisme de changement de rapport d'une boîte de vitesses manuelle de véhicule, ce mécanisme comprenant un levier de vitesse permettant à un conducteur de sélectionner des rapports.

Ce dispositif de contrôle comprend :
- une pièce mobile comportant au moins deux protubérances propres à être positionnées à proximité d'une partie cachée du levier de vitesse, et
- des moyens de positionnement propres à positionner la pièce mobile dans une position qui est choisie, en fonction d'une vitesse en cours du véhicule, parmi au moins deux positions différentes dans lesquelles l'une au moins des protubérances empêche au moins un déplacement de la partie cachée destiné à sélectionner l'un des rapports.

Ainsi, l'accès à un rapport inférieur à celui en cours de sélection ou au rapport de marche arrière peut être contrôlé de manière intelligente en fonction de la vitesse en cours du véhicule, ce qui évite une usure prématurée ou un endommagement de la boîte de vitesses.

Le dispositif de contrôle selon l'invention comporte d'autres caractéristiques qui peuvent être prises séparément ou en combinaison, et notamment :
- ses moyens de positionnement peuvent être propres à positionner la pièce mobile dans une première position dans laquelle ses protubérances empêchent aucun déplacement de la partie cachée, ou dans une deuxième position dans laquelle une première protubérance empêche un déplacement de la partie cachée destiné à sélectionner un rapport de marche arrière lorsque la vitesse en cours du véhicule est comprise entre un premier seuil et un deuxième seuil supérieur au premier seuil, ou dans une troisième position dans laquelle la première protubérance empêche au moins un déplacement de la partie cachée destiné à sélectionner un premier rapport de marche avant lorsque la vitesse en cours du véhicule est comprise entre le deuxième seuil et un troisième seuil supérieur au deuxième seuil, ou dans une quatrième position dans laquelle la première protubérance empêche au moins un déplacement de la partie cachée destiné à sélectionner le premier rapport de marche avant et une seconde protubérance empêche un déplacement de la partie cachée destiné à sélectionner un deuxième rapport de marche avant lorsque la vitesse en cours du véhicule est comprise entre le troisième seuil et un quatrième seuil supérieur au troisième seuil ;
   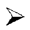 la première protubérance peut être propre dans la troisième position à empêcher également un déplacement de la partie cachée du levier de vitesse destiné à sélectionner le rapport de marche arrière lorsque la vitesse en cours du véhicule est comprise entre les deuxième et troisième seuils ;
   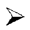 la première protubérance peut être propre dans la quatrième position à empêcher également un déplacement de la partie cachée du levier de vitesse destiné à sélectionner le rapport de marche arrière lorsque la vitesse en cours du véhicule est comprise entre les troisième et quatrième seuils ;
- ses moyens de positionnement comportent, selon l'invention, un moteur électrique entraînant en rotation un axe auquel est couplée la pièce mobile ;
   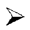 ses moyens de positionnement peuvent comprendre une biellette couplée en rotation à l'axe et à la pièce mobile. Dans ce cas, sa pièce mobile est montée à rotation sur une paroi d'un boîtier du mécanisme ;
- sa pièce mobile peut comprendre, d'une part, une première protubérance destinée à être positionnée dans certaines des positions derrière une première partie d'une pièce de couplage du mécanisme qui entoure une partie de la partie cachée et est solidarisée fixement à une extrémité d'un câble de contrôle du mécanisme, et, d'autre part, une seconde protubérance distante de la première protubérance et destinée à être positionnée dans certaines des positions devant une seconde partie de la pièce de couplage, opposée à la première partie de cette dernière par rapport au levier de vitesse.

L'invention propose également un mécanisme de changement de rapport, destiné à être couplé à une boîte de vitesses manuelle de véhicule, et comprenant un levier de vitesse permettant à un conducteur de sélectionner des rapports et un dispositif de contrôle du type de celui présenté ci-avant.

L'invention propose également un véhicule, éventuellement de type automobile, et comprenant une boîte de vitesses manuelle et un mécanisme de changement de rapport du type de celui présenté ci-avant.

Un tel véhicule peut également comprendre une chaîne de transmission hybride comportant un moteur thermique et au moins une machine motrice non thermique, le levier de vitesse du mécanisme de changement de rapport étant alors propre à permettre à un conducteur de sélectionner des rapports dits thermiques et des rapports dits électriques.

D'autres caractéristiques et avantages de l'invention apparaîtront à l'examen de la description détaillée ci-après, et des dessins annexés (obtenus pour certains d'entre eux en CAO/DAO (« Conception Assistée par Ordinateur/Dessin Assisté par Ordinateur »), d'où le caractère apparemment discontinu de certaines lignes), sur lesquels :
- la figure 1 illustre schématiquement, dans une vue en perspective, une partie d'un exemple de mécanisme de changement de rapport équipé d'un exemple de réalisation d'un dispositif de contrôle selon l'invention, placé dans une troisième position empêchant la sélection du rapport de marche arrière et du 1^{er} rapport de marche avant,
- la figure 2 illustre schématiquement un exemple de grille de sélection de vitesse associée à un levier de vitesse d'un mécanisme de changement de rapport du type de celui illustré sur la figure 1,
- la figure 3 illustre schématiquement, dans une vue en perspective, une partie du mécanisme de changement de rapport de la figure 1, avec le dispositif de contrôle placé dans une première position autorisant l'accès à tous les rapports,
- la figure 4 illustre schématiquement, dans une vue en perspective, une partie du mécanisme de changement de rapport de la figure 1, avec le dispositif de contrôle placé dans la troisième position, et
- la figure 5 illustre schématiquement, dans une vue en perspective, une partie du mécanisme de changement de rapport de la figure 1, avec le dispositif de contrôle placé dans une quatrième position empêchant la sélection du rapport de marche arrière et des 1^{er} et 2^{ème} rapports de marche avant.

L'invention a notamment pour but de proposer un dispositif de contrôle DC destiné à équiper un mécanisme de changement de rapport MCR d'une boîte de vitesses de type manuel d'un véhicule, afin de contrôler l'accès à certains des rapports.

Dans ce qui suit, on considère, à titre d'exemple non limitatif, que le véhicule est de type automobile. Il s'agit par exemple d'une voiture. Mais l'invention n'est pas limitée à ce type de véhicule. Elle concerne en effet tout type de véhicule comprenant une boîte de vitesses manuelle. Par conséquent, le véhicule peut être terrestre ou maritime (ou fluvial).

Par ailleurs, on considère dans ce qui suit, à titre d'exemple non limitatif, que la boîte de vitesses du véhicule fait partie d'une chaîne de transmission hybride, c'est-à-dire comprenant un moteur thermique, propre à être couplé à une boîte de vitesses manuelle via un organe de couplage (comme par exemple un embrayage), en vue d'entraîner un train de transmission, et au moins une machine motrice électrique associée à des moyens de stockage d'énergie et propre à entraîner le même train de transmission que le moteur thermique ou un autre train de transmission. Mais la boîte de vitesses manuelle pourrait faire partie d'une chaîne de transmission traditionnelle, c'est-à-dire ne comprenant qu'au moins un moteur thermique.

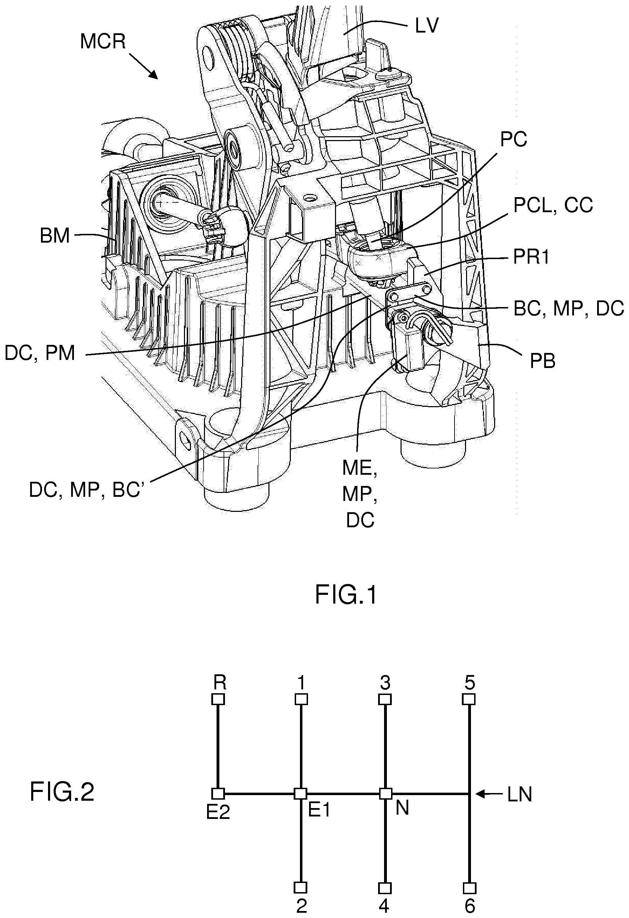

On a schématiquement représenté sur la figure 1 une partie d'un exemple de mécanisme de changement de rapport MCR destiné à être couplé à une boîte de vitesses manuelle (non représentée) d'un véhicule, et équipé d'un exemple de réalisation d'un dispositif de contrôle DC selon l'invention.

Comme illustré, un mécanisme de changement de rapport MCR comprend un boîtier BM auquel est couplé un levier de vitesse LV dont les déplacements sont contraints par une grille de sélection de vitesse, par exemple du type de celle illustrée non limitativement sur la figure 2.

Le levier de vitesse LV comprend une première extrémité, visible dans l'habitacle du véhicule, généralement munie d'un pommeau et destinée à être manipulée par une main d'un conducteur du véhicule, et une seconde extrémité, opposée à la première extrémité, invisible dans l'habitacle et couplée à une pièce de couplage PCL du mécanisme MCR. Cette pièce de couplage PCL est solidarisée fixement à une première extrémité d'un câble de contrôle CC du mécanisme MCR, qui comprend une seconde extrémité, opposée à la première et couplée à la boîte de vitesses.

On notera que lorsque la chaîne de transmission est traditionnelle, le levier de vitesse LV ne permet au conducteur de sélectionner que des rapports dits thermiques (c'est-à-dire associés au moteur thermique). Mais lorsque la chaîne de transmission est hybride, le levier de vitesse LV peut permettre au conducteur de sélectionner à la fois des rapports dits thermiques (c'est-à-dire dédiés aux modes de fonctionnement utilisant le moteur thermique) et des rapports dits électriques (dédiés au mode de fonctionnement utilisant la seule machine motrice électrique).

On a schématiquement illustré sur la figure 2 un exemple non limitatif de grille de sélection de vitesse pouvant être associée au levier de vitesse LV. Cet exemple de grille est adapté à une boîte de vitesses manuelle comprenant trois rapports thermiques impairs (1, 3 et 5), trois rapports thermiques pairs (2, 4 et 6), un rapport thermique de marche arrière R (ici situé à gauche du 1^{er} rapport thermique impair (1)), et une ligne de neutre LN donnant accès à un état neutre N de la boîte de vitesses manuelle, une marche avant électrique E1 et une marche arrière électrique E2. On comprendra que lorsque le levier de vitesse LV est placé dans la position E1 par le conducteur, cela signifie que ce dernier veut que la chaîne de transmission fonctionne en marche avant exclusivement avec la machine motrice électrique. De même, lorsque le levier de vitesse LV est placé dans la position E2 par le conducteur, cela signifie que ce dernier veut que la chaîne de transmission fonctionne en marche arrière exclusivement avec la machine motrice électrique. Dans toutes les autres positions, le conducteur veut que la chaîne de transmission fonctionne avec au moins le moteur thermique, sauf lorsque la boîte de vitesses est dans un état neutre (ou point mort).

Il est important de noter que l'invention concerne d'autres grilles de sélection de vitesse que celle illustrée sur la figure 2, avec ou sans portion dédiée à un rapport de marche arrière.

Comme illustré sur les figures 1 et 3 à 5, un dispositif de contrôle DC, selon l'invention, comprend une pièce mobile PM et des moyens de positionnement MP.

La pièce mobile PM comporte au moins deux protubérances PRj qui sont propres à être positionnées à proximité d'une partie cachée PC du levier de vitesse LV, afin d'empêcher, dans au moins une position de la pièce mobile PM, une sélection d'au moins un rapport de la boîte de vitesses. Cette partie cachée PC du levier de vitesse LV comprend la seconde extrémité de ce dernier (LV), laquelle est couplée à la pièce de couplage PCL. Elle est dite « cachée » du fait qu'elle n'est pas visible dans l'habitacle.

Cette pièce mobile PM est réalisée dans un matériau rigide et résistant, comme par exemple un métal (acier ou aluminium) ou une matière plastique.

Les moyens de positionnement MP sont propres à (ou agencés pour) positionner la pièce mobile PM dans une position qui est choisie, en fonction de la vitesse en cours du véhicule, parmi au moins deux positions différentes dans lesquelles l'une au moins des protubérances PRj empêche au moins un déplacement d'une partie cachée PC du levier de vitesse LV qui est destiné à sélectionner l'un des rapports.

On comprendra que selon la position dans laquelle est placée la pièce mobile PM, et donc ses protubérances PRj, laquelle dépend de la vitesse en cours du véhicule, on empêche la sélection par le levier de vitesse LV d'un ou plusieurs rapports. Par conséquent, selon la position choisie par les moyens de positionnement MP, une protubérance PRj peut empêcher la sélection de zéro rapport, d'un rapport, ou de deux rapports, voire plus encore si les besoins le requièrent.

Grâce à ce dispositif de contrôle DC, l'accès à au moins un rapport qui est inférieur à celui en cours de sélection, et/ou au rapport de marche arrière, peut désormais être contrôlé de manière intelligente en fonction de la vitesse en cours du véhicule. Par conséquent, plus la vitesse en cours du véhicule sera élevée, plus le nombre de rapports inférieurs (y compris éventuellement celui de marche arrière) interdits d'accès pourra être élevé. On comprendra que les rapports qui sont interdits d'accès pour une vitesse en cours donnée peuvent varier selon le rapport en cours de sélection. Ainsi, si le véhicule circule à une vitesse donnée vd en étant sur le 5^{ème} rapport, on peut, par exemple, empêcher l'accès aux 1^{er} et 2^{ème} rapports (ainsi qu'éventuellement au rapport de marche arrière), tandis que si le véhicule circule à cette même vitesse donnée vd en étant sur le 4^{ème} rapport, on peut, par exemple, empêcher l'accès au 1^{er} rapport (ainsi qu'éventuellement au rapport de marche arrière).

Ainsi, à chaque instant les moyens de positionnement MP interdisent l'accès à au moins un rapport ou autorisent l'accès à tous les rapports selon la vitesse en cours du véhicule. A cet effet, ils peuvent, par exemple, recevoir de moyens de calcul du véhicule (comme par exemple le « boîtier de servitude intelligent » (ou BSI)) des consignes de position qui sont fonction de la vitesse en cours du véhicule. Mais les moyens de positionnement MP pourraient comprendre des moyens de calcul propres à déterminer chaque consigne de position en fonction de la vitesse en cours du véhicule. Dans ce cas ces moyens de calcul peuvent être réalisés sous la forme de modules logiciels (ou informatiques ou encore « software »), ou bien d'une combinaison de circuits électroniques (ou « hardware ») et de modules logiciels.

Cela permet d'éviter une usure prématurée ou un endommagement de la boîte de vitesses.

On notera que dans l'exemple de réalisation illustré non limitativement sur les figures 1 et 3 à 5, la pièce mobile PM comprend des première PR1 (j = 1) et seconde PR2 (j = 2) protubérances distantes l'une de l'autre. Mais elle pourrait comprendre plus de deux protubérances PRj, et par exemple trois ou quatre selon la grille et/ou la stratégie utilisée(s).

Plus précisément, dans l'exemple de réalisation illustré non limitativement sur les figures 1 et 3 à 5, la première protubérance PR1 est destinée à être positionnée dans certaines des positions de sa pièce mobile PM derrière une première partie (arrière) de la pièce de couplage PCL (qui entoure une partie de la partie cachée PC du levier de vitesse LV). De plus, la seconde protubérance PR2 est destinée à être positionnée dans certaines des positions de sa pièce mobile PM devant une seconde partie (avant) de la pièce de couplage PCL, opposée à la première partie de cette dernière (PCL) par rapport au levier de vitesse LV.

Par exemple, les moyens de positionnement MP peuvent être propres à positionner la pièce mobile PM dans au moins quatre positions différentes.

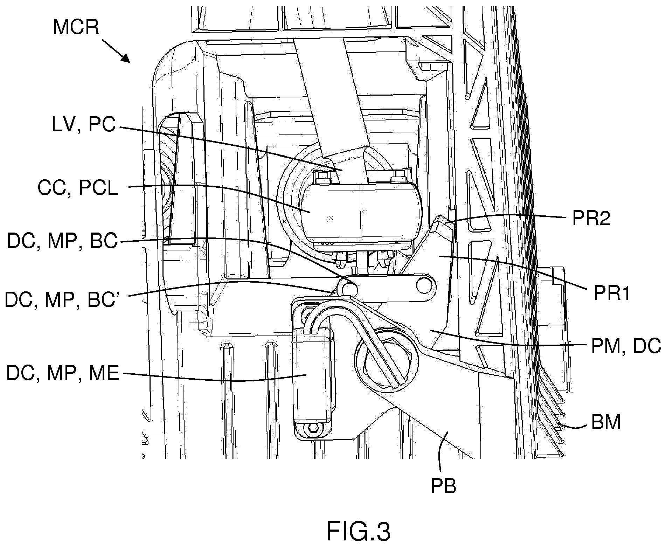

Dans une première position, illustrée sur la figure 3, les protubérances PRj empêchent aucun déplacement de la partie cachée PC.

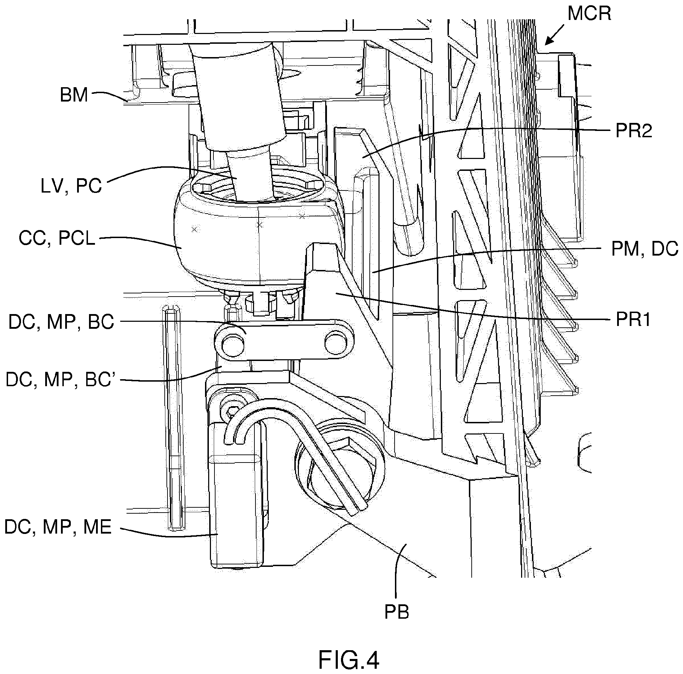

Dans une deuxième position, non illustrée, mais peu différente de celle illustrée sur les figures 1 et 4, la première protubérance PR1 empêche un déplacement de la partie cachée PC du levier de vitesse LV qui est destiné à sélectionner le rapport de marche arrière lorsque la vitesse en cours du véhicule est comprise entre un premier seuil s1 et un deuxième seuil s2 supérieur au premier seuil s1. Par conséquent, dans cette deuxième position seule la première protubérance PR1 définit une butée qui sert à interdire un accès à un rapport (de marche arrière) du fait qu'elle est placée juste derrière une première partie (arrière) de la pièce de couplage PCL lorsque cette dernière (PCL) est située dans une position correspondant à la position E2 de la grille.

Dans une troisième position, illustrée sur les figures 1 et 4, la première protubérance PR1 empêche au moins un déplacement de la partie cachée PC du levier de vitesse LV qui est destiné à sélectionner le 1^{er} rapport de marche avant lorsque la vitesse en cours du véhicule est comprise entre le deuxième seuil s2 et un troisième seuil s3, supérieur au deuxième seuil s2. Par conséquent, dans cette troisième position seule la première protubérance PR1 définit une butée qui sert à interdire un accès à au moins un rapport (le 1^{er}) du fait qu'elle est placée juste derrière la première partie (arrière) de la pièce de couplage PCL lorsque cette dernière (PCL) est située dans une position correspondant à la position E1 de la grille.

On notera que dans cette troisième position la première protubérance PR1 peut, comme illustré non limitativement sur les figures 1 et 4, être également propre à empêcher un déplacement de la partie cachée PC du levier de vitesse LV qui est destiné à sélectionner le rapport de marche arrière lorsque la vitesse en cours du véhicule est comprise entre les deuxième s2 et troisième s3 seuils. En effet, la première protubérance PR1 est encore placée juste derrière la première partie (arrière) de la pièce de couplage PCL lorsque cette dernière (PCL) est située dans une position correspondant à la position E2 de la grille.

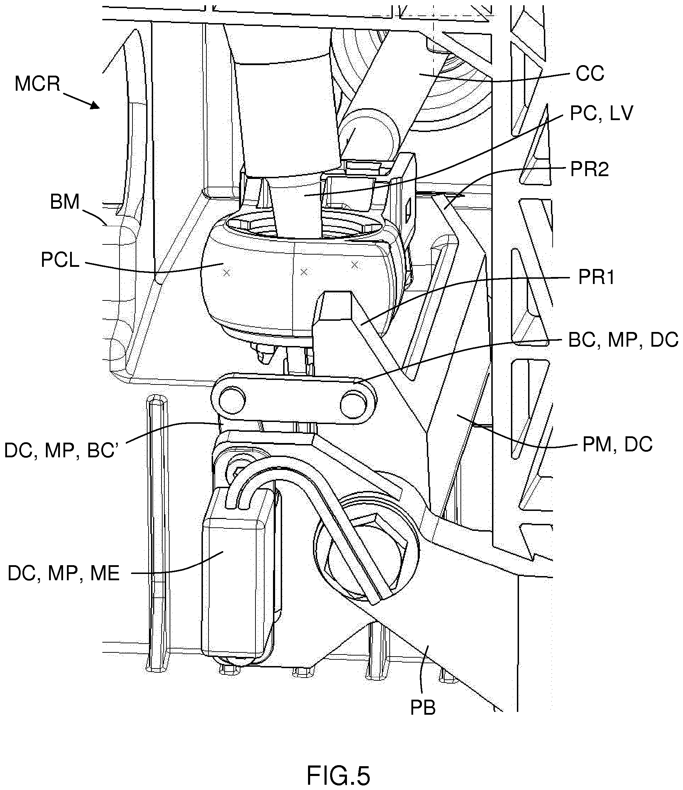

Dans une quatrième position, illustrée sur la figure 5, la première protubérance PR1 empêche au moins un déplacement de la partie cachée PC du levier de vitesse LV qui est destiné à sélectionner le 1^{er} rapport de marche avant, et la seconde protubérance PR2 empêche un déplacement de cette partie cachée PC qui est destiné à sélectionner le 2^{ème} rapport de marche avant lorsque la vitesse en cours du véhicule est comprise entre le troisième seuil s3 et un quatrième seuil s4, supérieur au troisième seuil s3. Par conséquent, dans cette quatrième position non seulement la première protubérance PR1 définit une butée qui sert à interdire un accès à au moins un rapport (le 1^{er}) du fait qu'elle est placée juste derrière la première partie (arrière) de la pièce de couplage PCL lorsque cette dernière (PCL) est située dans une position correspondant à la position E1 de la grille, mais également la seconde protubérance PR2 définit une autre butée qui sert à interdire un accès à un rapport (le 2^{ème}) du fait qu'elle est placée juste devant la seconde partie (avant) de la pièce de couplage PCL lorsque cette dernière (PCL) est située dans une position correspondant à la position E1 de la grille.

On notera que dans cette quatrième position la première protubérance PR1 peut, comme illustré non limitativement sur la figure 5, être également propre à empêcher un déplacement de la partie cachée PC du levier de vitesse LV qui est destiné à sélectionner le rapport de marche arrière lorsque la vitesse en cours du véhicule est comprise entre les troisième s3 et quatrième s4 seuils. En effet, la première protubérance PR1 est encore placée juste derrière la première partie (arrière) de la pièce de couplage PCL lorsque cette dernière (PCL) est située dans une position correspondant à la position E2 de la grille.

On notera que les différents seuils de vitesse précités ne sont pas forcément fixes (ou prédéfinis). En effet, l'un au moins d'entre eux peut être éventuellement variable en fonction du rapport en cours de sélection et/ou les conditions d'adhérence du véhicule. Dans ce cas les moyens de calcul (qui déterminent les consignes de position) peuvent, par exemple, utiliser une loi prédéfinie ou une table de correspondance leur permettant de déterminer chaque seuil en fonction du rapport en cours de sélection et/ou les conditions d'adhérence du véhicule.

Les moyens de positionnement MP peuvent être agencés de différentes manières.

Ainsi, et comme illustré non limitativement sur les figures 1 et 3 à 5, les moyens de positionnement MP peuvent, par exemple, comprendre un moteur électrique ME qui entraîne en rotation un axe auquel est couplée la pièce mobile PM. Cet axe de rotation est donc chargé d'entraîner en rotation la pièce mobile PM, directement ou indirectement.

Ce moteur électrique ME peut, par exemple, être de type servomoteur ou pas à pas, éventuellement associé à un réducteur.

En complément de ce moteur électrique ME rotatif, les moyens de positionnement MP peuvent également comprendre, comme illustré non limitativement sur les figures 1 et 3 à 5, une première biellette BC couplée en rotation à l'axe de rotation et à la pièce mobile PM. Dans ce cas, la pièce mobile PM est montée à rotation sur une paroi PB du boîtier BM du mécanisme MCR. Par exemple, ce couplage entre la première biellette BC et l'axe de rotation peut se faire via une seconde biellette BC'. Dans ce cas, cette dernière (BC') est solidarisée à l'axe de rotation et à la première biellette BC. On notera que le moteur électrique ME (et les éventuels moyens de calcul) peu(ven)t, comme illustré, être solidarisé(s) fixement à cette même paroi PB.

Mais dans une variante de réalisation non illustrée, l'axe de rotation qui est entraîné par le moteur électrique ME pourrait être solidarisé fixement à la pièce mobile PM afin de l'entraîner directement en rotation, sans pièce intermédiaire.

D'autres agencements des moyens de positionnement MP peuvent être envisagés. Ainsi, au lieu d'entraîner en rotation (directement ou indirectement) la pièce mobile PM, les moyens de positionnement MP pourraient, par exemple, être agencés de manière à translater cette dernière (PM) d'une position à l'autre.

L'invention offre plusieurs avantages, parmi lesquels :
- elle permet d'interdire l'accès à un ou plusieurs rapports inférieurs à celui en cours de sélection, en fonction de la vitesse en cours du véhicule,
- elle peut être facilement intégrée dans un mécanisme de changement de rapport existant, moyennant éventuellement la réalisation de trous de fixation dans au moins une paroi du boîtier pour la pièce mobile et une partie des moyens de positionnement,
- elle n'entraîne aucune modification de la boîte de vitesses manuelle.

## Revendications

1. Dispositif de contrôle (DC) contrôlant un mécanisme de changement de rapport (MCR) d'une boîte de vitesses manuelle de véhicule, ledit mécanisme (MCR) comprenant un levier de vitesse (LV) permettant à un conducteur de sélectionner des rapports, ledit dispositif comprenant i) une pièce mobile (PM) comportant au moins deux protubérances (PRj) propres à être positionnées à proximité d'une partie cachée (PC) dudit levier de vitesse (LV), et ii) des moyens de positionnement (MP) propres à positionner ladite pièce mobile (PM) dans une position choisie, en fonction d'une vitesse en cours dudit véhicule, parmi au moins deux positions différentes dans lesquelles l'une au moins desdites protubérances (PRj) empêche au moins un déplacement de ladite partie cachée (PC) destiné à sélectionner l'un desdits rapports, ledit dispositif étant **caractérisé en ce que** lesdits moyens de positionnement (MP) comprennent un moteur électrique (ME) entraînant en rotation un axe auquel est couplée ladite pièce mobile (PM).

2. Dispositif selon la revendication 1, **caractérisé en ce que** lesdits moyens de positionnement (MP) sont propres à positionner ladite pièce mobile (PM) dans une première position dans laquelle ses protubérances (PRj) empêchent aucun déplacement de ladite partie cachée (PC).

3. Dispositif selon la revendication 1 ou 2, **caractérisé en ce que** lesdits moyens de positionnement (MP) sont propres à positionner ladite pièce mobile (PM) dans une deuxième position dans laquelle une première protubérance (PR1) empêche un déplacement de ladite partie cachée (PC) destiné à sélectionner un rapport de marche arrière lorsque ladite vitesse en cours du véhicule est comprise entre un premier seuil et un deuxième seuil supérieur audit premier seuil.

4. Dispositif selon la revendication 3, **caractérisé en ce que** lesdits moyens de positionnement (MP) sont propres à positionner ladite pièce mobile (PM) dans une troisième position dans laquelle ladite première protubérance (PR1) empêche au moins un déplacement de ladite partie cachée (PC) destiné à sélectionner un premier rapport de marche avant lorsque ladite vitesse en cours du véhicule est comprise entre ledit deuxième seuil et un troisième seuil supérieur audit deuxième seuil.

5. Dispositif selon la revendication 4, **caractérisé en ce que** lesdits moyens de positionnement (MP) sont propres à positionner ladite pièce mobile (PM) dans une quatrième position dans laquelle ladite première protubérance (PR1) empêche au moins un déplacement de ladite partie cachée (PC) destiné à sélectionner ledit premier rapport de marche avant et une seconde protubérance (PR2) empêche un déplacement de ladite partie cachée (PC) destiné à sélectionner un deuxième rapport de marche avant lorsque ladite vitesse en cours du véhicule est comprise entre ledit troisième seuil et un quatrième seuil supérieur audit troisième seuil.

6. Dispositif selon la revendication 4 ou 5, **caractérisé en ce que** ladite première protubérance (PR1) est propre dans ladite troisième position à empêcher également un déplacement de ladite partie cachée (PC) destiné à sélectionner ledit rapport de marche arrière lorsque ladite vitesse en cours du véhicule est comprise entre lesdits deuxième et troisième seuils.

7. Dispositif selon la revendication 5, **caractérisé en ce que** ladite première protubérance (PR1) est propre dans ladite quatrième position à empêcher également un déplacement de ladite partie cachée (PC) destiné à sélectionner ledit rapport de marche arrière lorsque ladite vitesse en cours du véhicule est comprise entre lesdits troisième et quatrième seuils.

8. Dispositif selon l'une des revendications 1 à 7, **caractérisé en ce que** lesdits moyens de positionnement (MP) comprennent une biellette (BC) couplée en rotation audit axe et à ladite pièce mobile (PM), et **en ce que** ladite pièce mobile (PM) est montée à rotation sur une paroi (PB) d'un boîtier (BM) dudit mécanisme (MCR).

9. Dispositif selon l'une des revendications 1 à 8, **caractérisé en ce que** ladite pièce mobile (PM) comprend i) une première protubérance (PR1) destinée à être positionnée dans certaines desdites positions derrière une première partie d'une pièce de couplage (PCL) dudit mécanisme (MCR) entourant une partie de ladite partie cachée (PC) et solidarisée fixement à une extrémité d'un câble de contrôle (CC) dudit mécanisme (MCR), et ii) une seconde protubérance (PR2) distante de ladite première protubérance (PR1) et destinée à être positionnée dans certaines desdites positions devant une seconde partie de ladite pièce de couplage (PCL), opposée à ladite première partie de cette dernière (PCL) par rapport audit levier de vitesse (LV).

10. Mécanisme de changement de rapport (MCR) pour une boîte de vitesses manuelle de véhicule, ledit mécanisme (MCR) comprenant un levier de vitesse (LV) permettant à un conducteur de sélectionner des rapports, **caractérisé en ce qu'**il comprend en outre un dispositif de contrôle (DC) selon l'une des revendications précédentes.

11. Véhicule comprenant une boîte de vitesses manuelle, **caractérisé en ce qu'**il comprend en outre un mécanisme de changement de rapport (MCR) selon la revendication 10.

12. Véhicule selon la revendication 11, **caractérisé en ce qu'**il comprend en outre une chaîne de transmission hybride comportant un moteur thermique et au moins une machine motrice non thermique, ledit levier de vitesse (LV) du mécanisme de changement de rapport (MCR) étant propre à permettre à un conducteur de sélectionner des rapports dits thermiques et des rapports dits électriques.

## Patentansprüche

1. Kontrollvorrichtung (DC), die einen Gangschaltmechanismus (MCR) eines manuellen Fahrzeugschaltgetriebes steuert, wobei der Mechanismus (MCR) einen Schalthebel (LV) umfasst, der es einem Fahrer erlaubt, Gänge auszuwählen, wobei die Vorrichtung i) ein bewegliches Teil (PM) umfasst, das mindestens zwei Ausstülpungen (PRj) umfasst, die geeignet sind, in der Nähe eines verborgenen Teils (PC) des Schalthebels (LV) positioniert zu sein, und ii) Positionierungsmittel (MP) umfasst, die geeignet sind, um das bewegliche Teil (PM) in einer ausgewählten Position in Abhängigkeit von einer aktuellen Geschwindigkeit des Fahrzeugs unter mindestens zwei unterschiedlichen Positionen zu positionieren, in welchen mindestens eine der Ausstülpungen (PRj) mindestens eine Verlagerung des verborgenen Teils (PC) verhindert, die dazu bestimmt ist, mindestens einen der Gänge auszuwählen, Vorrichtung **dadurch gekennzeichnet, dass** die Positionierungsmittel (MP) einen Elektromotor (ME) umfassen, der eine Achse, mit der das bewegliche Teil (PM) gekoppelt ist, in Drehung antreibt.

2. Vorrichtung nach Anspruch 1, **dadurch gekennzeichnet, dass** die Positionierungsmittel (MP) geeignet sind, um das bewegliche Teil (PM) in einer ersten Position zu positionieren, in der seine Ausstülpungen (PRj) keine Verlagerung des verborgenen Teils (PC) verhindern.

3. Vorrichtung nach Anspruch 1 oder 2, **dadurch gekennzeichnet, dass** die Positionierungsmittel (MP) geeignet sind, um das bewegliche Teil (PM) in einer zweiten Position zu positionieren, in der die erste Ausstülpung (PR1) eine Verlagerung des verborgenen Teils (PC) verhindert, die dazu bestimmt ist, einen Rückwärtsgang auszuwählen, wenn die aktuelle Geschwindigkeit des Fahrzeugs zwischen einer ersten Schwelle und einer zweiten Schwelle, die höher ist als die erste Schwelle, liegt.

4. Vorrichtung nach Anspruch 3, **dadurch gekennzeichnet, dass** die Positionierungsmittel (MP) geeignet sind, um das bewegliche Teil (PM) in einer dritten Position zu positionieren, in der die erste Ausstülpung (PR1) mindestens eine Verlagerung des verborgenen Teils (PC) verhindert, die dazu bestimmt ist, einen ersten Vorwärtsgang auszuwählen, wenn die aktuelle Geschwindigkeit des Fahrzeugs zwischen der zweiten Schwelle und der dritten Schwelle, die höher ist als die zweite Schwelle, liegt.

5. Vorrichtung nach Anspruch 4, **dadurch gekennzeichnet, dass** die Positionierungsmittel (MP) geeignet sind, das bewegliche Teil (PM) in einer vierten Position zu positionieren, in der der erste Vorsprung (PR1) mindestens eine Verlagerung des verborgenen Teils (PC) verhindert, die dazu bestimmt ist, den ersten Vorwärtsgang auszuwählen, und eine zweite Ausstülpung (PR2) eine Verlagerung des verborgenen Teils (PC) verhindert, die dazu bestimmt ist, einen zweiten Vorwärtsgang auszuwählen, wenn die aktuelle Geschwindigkeit des Fahrzeugs zwischen der dritten Schwelle und einer vierten Schwelle, die höher ist als die dritte Schwelle, liegt.

6. Vorrichtung nach Anspruch 4 oder 5, **dadurch gekennzeichnet, dass** die erste Ausstülpung (PR1) in der dritten Position geeignet ist, auch eine Verlagerung des verborgenen Teils (PC) zu verhindern, die dazu bestimmt ist, den Rückwärtsgang auszuwählen, wenn die aktuelle Geschwindigkeit des Fahrzeugs zwischen der zweiten und dritten Schwelle liegt.

7. Vorrichtung nach Anspruch 5, **dadurch gekennzeichnet, dass** die erste Ausstülpung (PR1) in der vierten Position geeignet ist, auch eine Verlagerung des verborgenen Teils (PC) zu verhindern, die dazu bestimmt ist, den Rückwärtsgang auszuwählen, wenn die aktuelle Geschwindigkeit des Fahrzeugs zwischen der dritten und vierten Schwelle liegt.

8. Vorrichtung nach einem der Ansprüche 1 bis 7, **dadurch gekennzeichnet, dass** die Positionierungsmittel (MP) einen Schwingarm (BC) umfassen, der in Drehung mit der Achse und dem beweglichen Teil (PM) gekoppelt ist, und dass das bewegliche Teil (PM) in Drehung auf einer Wand (PB) eines Gehäuses (BM) des Mechanismus (MCR) montiert ist.

9. Vorrichtung nach einem der Ansprüche 1 bis 8, **dadurch gekennzeichnet, dass** das bewegliche Teil (PM) i) eine erste Ausstülpung (PR1) umfasst, die dazu bestimmt ist, in bestimmten der Positionen hinter einem ersten Teil eines Kupplungsteils (PCL) des Mechanismus (MCR), der einen Teil des verborgenen Teils (PC) umgibt und fest mit einem Ende eines Steuerkabels (CC) des Mechanismus (MCR) verbunden ist, positioniert zu sein, und ii) eine zweite Ausstülpung (PR2), die von der ersten Ausstülpung (PR1) entfernt und dazu bestimmt ist, in bestimmten der Positionen vor einem zweiten Teil des Kupplungsteils (PCL), das dem ersten Teil dieses Letzteren (PCL) bezüglich des Schalthebels (LV) entgegengesetzt ist, positioniert zu sein.

10. Gangwechselmechanismus (MCR) für ein manuelles Fahrzeugschaltgetriebe, wobei der Mechanismus (MCR) einen Schalthebel (LV) umfasst, der es einem Fahrer erlaubt, Gänge auszuwählen, **dadurch gekennzeichnet, dass** er außerdem eine Kontrollvorrichtung (DC) nach einem der vorstehenden Ansprüche umfasst.

11. Fahrzeug, das ein manuelles Schaltgetriebe umfasst, **dadurch gekennzeichnet, dass** es außerdem einen Gangwechselmechanismus (MCR) nach Anspruch 10 umfasst.

12. Fahrzeug nach Anspruch 11, **dadurch gekennzeichnet, dass** es außerdem einen Hybridübertragungsstrang umfasst, der eine Brennkraftmaschine und mindestens eine Antriebsmaschine, die nicht thermisch ist, umfasst, wobei der Schalthebel (LV) des Gangwechselmechanismus (MCR) geeignet ist, es einem Fahrer zu erlauben, thermisch genannte Gänge und elektrisch genannte Gänge auszuwählen.

## Claims

1. A control device (DC) controlling a gear change mechanism (MCR) of a manual gearbox of a vehicle, said mechanism (MCR) including a gear shift leaver (LV) permitting a driver to select gears, said device including i) a movable part (PM) comprising at least two protuberances (PRj) suitable to be positioned close to a hidden part (PC) of said gear shift lever (LV), and ii) positioning means (MP) suitable to position said movable part (PM) in a selected position, as a function of a current speed of said vehicle, from at least two different positions in which one at least of said protuberances (PRj) prevents at least a displacement of said hidden part (PC) intended to select one of said gears, said device being **characterized in that** said positioning means (MP) include an electric motor (ME) driving in rotation an axis to which said movable part (PM) is coupled.

2. The device according to claim 1, **characterized in that** said positioning means (MP) are suitable to position said movable part (PM) in a first position in which its protuberances (PRj) prevent any displacement of said hidden part (PC).

3. The device according to claim 1 or 2, **characterized in that** said positioning means (MP) are suitable to position said movable part (PM) in a second position in which a first protuberance (PR1) prevents a displacement of said hidden part (PC) intended to select a reverse gear when said current speed of the vehicle is comprised between a first threshold and a second threshold greater than said first threshold.

4. The device according to claim 3, **characterized in that** said positioning means (MP) are suitable to position said movable part (PM) in a third position in which said first protuberance (PR1) prevents at least a displacement of said hidden part (PC) intended to select a first forward gear when said current speed of the vehicle is comprised between said second threshold and a third threshold greater than said second threshold.

5. The device according to claim 4, **characterized in that** said positioning means (MP) are suitable to position said movable part (PM) in a fourth position in which said first protuberance (PR1) prevents at least a displacement of said hidden part (PC) intended to select said first forward gear and a second protuberance (PR2) prevents a displacement of said hidden part (PC) intended to select a second forward gear when said current speed of the vehicle is comprised between said third threshold and a fourth threshold greater than said third threshold.

6. The device according to claim 4 or 5, **characterized in that** said first protuberance (PR1) is suitable in said third position to also prevent a displacement of said hidden part (PC) intended to select said reverse gear when said current speed of the vehicle is comprised between said second and third thresholds.

7. The device according to claim 5, **characterized in that** said first protuberance (PR1) is suitable in said fourth position to also prevent a displacement of said hidden part (PC) intended to select said reverse gear when said current speed of the vehicle is comprised between said third and fourth thresholds.

8. The device according to one of claims 1 to 7, **characterized in that** said positioning means (MP) include a rod (BC) coupled in rotation to said axis and to said movable part (PM), and **in that** said movable part (PM) is mounted in rotation on a wall (PB) of a case (BM) of said mechanism (MCR).

9. The device according to one of claims 1 to 8, **characterized in that** said movable part (PM) includes i) a first protuberance (PR1) intended to be positioned in certain of said positions behind a first part of a coupling piece (PCL) of said mechanism (MCR) surrounding a portion of said hidden part (PC) and fixedly secured to an end of a control cable (CC) of said mechanism (MCR), and ii) a second protuberance (PR2) remote from said first protuberance (PR1) and intended to be positioned in certain of said positions in front of a second part of said coupling piece (PCL), opposite said first part of the latter (PCL) with respect to said gear shift lever (LV).

10. A gear change mechanism (MCR) for a manual gearbox of a vehicle, said mechanism (MCR) including a gear shift lever (LV) permitting a driver to select gears, **characterized in that** it further includes a control device (DC) according to one of the preceding claims.

11. A vehicle including a manual gearbox, **characterized in that** it further includes a gear change mechanism (MCR) according to claim 10.

12. The vehicle according to claim 11, **characterized in that** it further includes a hybrid transmission chain comprising a heat engine and at least one non-thermal power machine, said gear shift lever (LV) of the gear change mechanism (MCR) being suitable to permit a driver to select gears designated thermal, and gears designated electric.
